# EUROPEAN PATENT APPLICATION

(11) **EP 1 884 420 A2**
(43) Date of publication of application: **06.02.2008**
(21) Application number: 07111608.1
(22) Date of filing: 03.07.2007
(51) Int. Cl.: B60R 25/00, B60T 7/08

(54) **Theft prevention of a vehicle by credential verification of a vehicle driver before unlocking a parking control member**

(30) Priority: 27.07.2006 US 494098
(71) Applicant: Bendix Commercial Vehicle Systems, LLC, Elyria, Ohio 44035 (US)
(72) Inventor: Bennettt, Mark, Lagrange, OH 44050 (US); Knaack, Christopher, Huntersville, NC 28078 (US); Mosman, Parker, Nevada, OH 44849 (US)
(74) Representative: Finnie, Peter John

(57) **Abstract**

Apparatus comprising a control member for a valve for controlling a vehicle brake function, and an electrically operable lockout for the control member. An electronic reader associated with the lockout is operable in response to communication with a personal data device to control operation of the lockout. The reader may be used to effect credential verification of a vehicle driver and enable other functions.

## Description

### Background of the Invention

Heavy vehicles, such as heavy trucks, typically use air brakes. When the truck is parked, the park brake is set by actuating a park control valve, typically by pulling a button (electric or manual) on the vehicle dashboard. When it is desired to release the park brake, the valve is again actuated, typically by pushing the button. Sometimes a driver desires to leave the vehicle with the key in the ignition and the engine running, and set the park brakes, yet still make the vehicle immobile to theft. Button lockout devices are known, which mechanically cover the park brake release button to make it inaccessible--thus, the park brakes could not be released and the vehicle could not be moved. Known button lockout devices require keys.

### Summary of the Invention

In one aspect the invention relates to apparatus comprising a control member for a valve for controlling a vehicle brake function, and an electrical lockout for the control member. An electronic reader associated with the lockout is operable in response to communication with a personal data device to control operation of the lockout.

In another aspect the invention relates to a method including the steps of providing a park control valve control member with an associated electrically operable lockout; providing a reader that is electrically connected with the lockout; positioning a transponder adjacent to the reader; and disabling the lockout in response to said positioning step.

In another aspect the invention relates to apparatus comprising a vehicle access control mechanism for use on a vehicle, and a reader that is electrically connected with the vehicle access control mechanism. A personal data device is electrically cooperable with the reader to control operation of the vehicle access control mechanism. The personal data device is also operable to control access to a device other than the vehicle.

### Brief Description of the Drawings

Further features of the invention will be apparent to one of ordinary skill in the art to which the invention pertains, from a reading of the following description in conjunction with the attached drawings, in which:

Fig. 1 is a schematic illustration of portion of a vehicle air brake system in accordance with a first embodiment of the invention; and

Fig. 2 is a schematic illustration of portion of a vehicle air brake system in accordance with a second embodiment of the invention.

### Detailed Description of Embodiments of the Invention

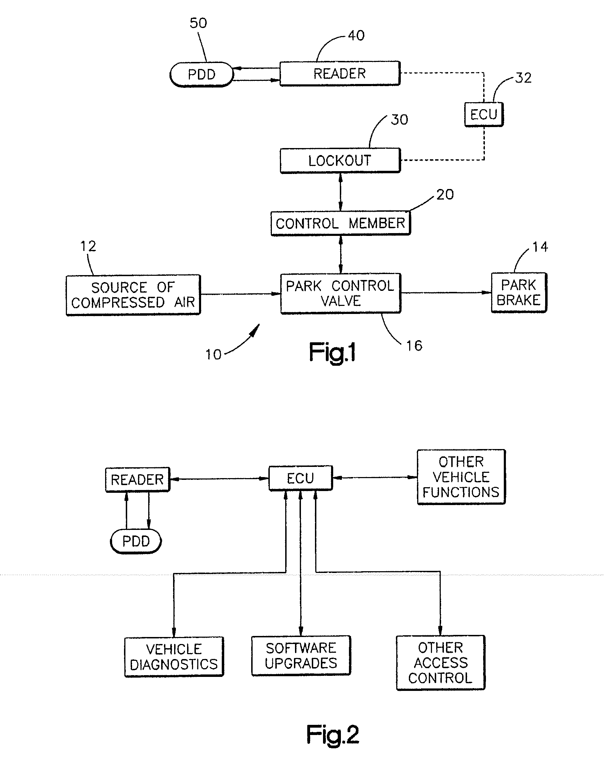

The invention relates to an air brake and vehicle or driver management system using a portable data device. The invention is applicable to systems of different constructions, and to various methods of operation. As representative of the invention, Fig. 1 illustrates schematically a portion of a vehicle air brake system 10 in accordance with a first exemplary embodiment of the invention.

The braking system 10 includes a source of compressed air, such as a compressor and/or a reservoir. The compressed air is used in a park brake 14 of the vehicle. Flow of air to and from the park brake 14 is controlled by a park control valve 16. A typical valve 16 is a push-pull, manually operable on/off valve with an integral double check.

Associated with the park control valve 16 is a control member 20. The control member 20 is operable, or engageable, to control the valve 16. Specifically, the control member 20 may be operated to set the park brake 14, and may also be operated to release the park brake. The control member 20 may include, as one example, a manually engageable push button. The control member 20 may be configured as a direct manual control of the valve 16, or may be electric and at least partially remote, for example, a solenoid, or structure for controlling a solenoid, or controlled by a solenoid. Other possibilities are described below.

The braking system 10 also includes an electrically operable lockout 30 for the control member 20. The lockout 30 can be set to block operation of the control member 20 in a manner so as to release the park brake 14--thus, can be set to "lock out" the park brake release.

Control of the lockout 30 is via an ECU shown schematically at 32. The ECU 32 may be a braking system ECU, or an engine ECU, or a trailer ECU, or another type. The lockout is any electrically controlled or operated device or method or means for blocking operation of the control member--a physical device, or software, etc.

An input to the ECU 32 is a reader 40 that is operative to communicate with a personal data device, or "PDD", 50. The PDD 50 is a small transponder that can be carried by a driver of the vehicle and that can communicate electronically with the reader 40.

One known PDD 50 that may be suitable is the I-button, which is made by Maxim Integrated Products, Inc., 120 San Gabriel Drive, Sunnyvale, CA 94086. A suitable reader 40 is also sold by the same company, for example. The PDD 50 may be carried on a keychain, for example.

The PDD 50 and the reader 40 communicate, for example, by touching the PDD to a surface of the reader. Alternatively, there may be wireless communication between the PDD 50 and the reader 40.

The ECU 32 is programmed to control the lockout 30 electronically. This control is based on the signal from the reader 40, as set by the presence or absence of suitable communication with the PDD 50.

Specifically, the ECU 32 can be programmed to lock out (block, or prevent) release of the park control valve 16, by blocking operation of the control member 20, unless suitable communication is first established with a particular PDD 50. This blocking is useful in preventing actuation of the valve 16 in a manner so as to release the park brake 14, although it can be used in controlling all aspects of operation of the valve.

As a result, a driver can set the park brake 14 manually, then leave the vehicle, with the engine running. The park brake control valve 16 is electrically locked out. When the driver returns, the driver places the PDD 50 to the reader 40. The reader 40 sends an appropriate signal to (or otherwise electrically communicates with) the ECU 32, which recognizes the presence of the PDD and as a result disables the lockout 30. Without such a signal, the ECU 32 and the lockout 30 cooperate to electronically block manual operation of the control member 20 and thus actuation of the valve 16, and thus block release of the park brake 14. In this manner, the reader 40 cooperates with the PDD 50 to control release of the park brake 14.

Each driver might carry a personalized PDD 50 that indicates the presence of only that one person. This could minimize the need for keys, keycards, etc.

The PDD 50 and the reader 40 (or another reader in the vehicle) can cooperate to control other functions. Such functions are shown schematically in Fig. 2.

For example, the PDD 50 and the reader 40 can cooperate with the ECU 32 to log driver activities, unlocking of the vehicle door, starting and stopping of the vehicle, etc. To accomplish this, the reader 40 can be electronically associated with a vehicle device other than the park brake 14 control valve 16 control member 20. This information can be useful in driver and fleet management.

The PDD 50 can be used to control other access. For example, the PDD 50 can be used to control access to the vehicle door, to a truck fleet area fence, a shop door, etc. The PDD 50 can be used to transfer diagnostic information to and from the vehicle. The PDD 50 can also be used for transferring software updates to the vehicle.

In one example, then, the PDD can be electrically connected, through a reader, to one or more ECUs of the vehicle. The PDD can be programmed to perform mandatory credential verification for the driver. Once the ECU is satisfied, it can unlock the park brake system for use; transmit the verification of credentials to any and all other interested nodes on the vehicle network (engine ECU, ABS ECU, body ECU, fleet logistics ECU); automatically read and store any fault information; automatically write any firmware upgrades to the park system ECU that are carried on the driver's PDD; and allow the verified driver the right to lock the park brake system in the applied position with the ignition still running and/or the key in the ignition.

As one example, the control member 20 may be the solenoid for a solenoid-operated air brake valve that is electrically controlled to block or pass supply air to a vehicle brake (or to a portion of a vehicle braking system) via the park control valve 16. The valve 16 includes a piston that is operated by pilot air from a solenoid-controlled pilot valve. Thus, operation of the solenoid serves to control operation of the vehicle brake component. If the solenoid can be operated, then the brake component can be operated--to apply or release, for example. The solenoid control can be used to prevent sufficient pressure from being applied or present at supply input, or the control or pilot input, or the delivery output, of a valve such as the park control valve.

A system in accordance with the present invention can enable control or lockout of the brake component by controlling or locking out the solenoid. The ECU can be programmed so that unless the PDD is associated with the reader, the solenoid is inoperable--that is, the state of the solenoid can not be changed. In one such scenario, the driver can set the vehicle park brake using the appropriate electronic controls through the ECU, then place the ECU into a mode by which the ECU will not allow operation of the solenoid unless the PDD is associated with the reader. The ECU is placed in this mode by setting a code or a moving a switch or via some other kind of human input receptor. In this manner, the park brake can be set, and the driver can leave the vehicle, taking the PDD, and know that the park brake can not be released until the driver returns with the PDD.

Alternatively, the control member for the park control valve could be a separate pneumatic port and shuttle valve (or spool valve) integral to the park control valve. Still further, the valve that is controlled to perform the park brake lock function could be a separate blocking valve between the reservoir and the park brake.

Successful verification can be noted with an appropriate audible or visual signal from the vehicle, such as a chime or flashing light; attempted usage by an unverified driver can be noted by a different signal or warning.

The system thus provides the possibility of remote control of a control member, via a PDD and reader that are not located hear the actual switch or control member being controlled, as compared to the more direct (as to location) control of the control member shown in Fig. 1. The PDD can be used, when the ECU is programmed appropriately, to control operation of any electrically controllable device in the ECU's ambit. If the human input receptor is electronic, then a lockout can be located in one of various different locations within the electric circuitry associated with the receptor. The lockout can thus be "virtual", in the sense that it is software control of the solenoid.

From the above description of the invention, those skilled in the art will perceive improvements, changes, and modifications in the invention. Such improvements, changes, and modifications within the skill of the art are intended to be included within the scope of the appended claims.

## Claims

1. Apparatus comprising:
a control member for a park control valve for controlling a vehicle parking brake;
an electrically operable lockout for the control member; and
an electronic reader associated with the lockout, the reader being operable in response to communication with a personal data device to control operation of the lockout.

2. Apparatus as set forth in claim 1 further comprising a personal data device operable to communicate with the reader to control operation of the lockout.

3. Apparatus as set forth in claim 1 wherein the personal data device is personalized to a driver of the vehicle.

4. Apparatus as set forth in claim 1 wherein the personal data device is an I-button brand device.

5. Apparatus as set forth in claim 1 wherein the personal data device is operable for controlling vehicle-related access functions.

6. Apparatus as set forth in claim 1 wherein the personal data device is operable to control vehicle functions other than access functions, such as logging driver activities.

7. Apparatus as set forth in claim 1 wherein the personal data device is operable to carry diagnostic information to and from the vehicle and the reader is operable to carry diagnostic information to and from the personal data device.

8. Apparatus as set forth in claim 1 wherein the personal data device is operable to carry software upgrades to the vehicle.

9. A method including the steps of:
providing a park control valve control member with an associated electrically operable lockout;
providing a reader that is electrically connected with the lockout;
positioning a transponder adjacent to the reader; and
disabling the lockout in response to said positioning step.

10. A method as set forth in claim 9 wherein said step of positioning a transponder near the reader comprises establishing wireless communication between the transponder and the reader.

11. A method as set forth in claim 9 wherein said step of positioning a transponder near the reader comprises making a direct mechanical connection between the transponder and the reader to establish electrical communication between the transponder and the reader.

12. Apparatus comprising:
a vehicle access control mechanism for use on a vehicle;
a reader that is electrically connected with the vehicle access control mechanism; and
a personal data device electrically cooperable with the reader to control operation of the vehicle access control mechanism;
the personal data device also being operable to control access to a device other than the vehicle.

13. Apparatus as set forth in claim 12 wherein the personal data device is also operable to control access to a doorway.

14. Apparatus as set forth in claim 12 wherein the personal data device is operable to carry diagnostic information to and from the vehicle and the reader is operable to cooperate with the personal data device to send diagnostic information to the personal data device and to receive diagnostic information from the personal data device.

15. Apparatus comprising:
a control member for a park control valve for controlling a vehicle parking brake;
an electrically operable lockout for the control member; and
means associated with the lockout for controlling operation of the lockout.

16. Apparatus as set forth in claim 15 wherein the means for controlling operation of the lockout comprises an electronic reader associated with the lockout, the reader being operable in response to communication with a personal data device to control operation of the lockout.

17. Apparatus as set forth in claim 16 further comprising a personal data device operable to communicate with the reader to control operation of the lockout.

18. Apparatus as set forth in claim 16 wherein the personal data device is personalized to a driver of the vehicle.

19. Apparatus as set forth in claim 16 wherein the personal data device is an I-button brand device.

20. Apparatus as set forth in claim 16 wherein the personal data device is operable for controlling vehicle-related access functions.

21. Apparatus as set forth in claim 16 wherein the personal data device is operable to control vehicle functions other than access functions, such as logging driver activities.

22. Apparatus as set forth in claim 17 wherein the personal data device is operable to carry diagnostic information to and from the vehicle and the reader is operable to carry diagnostic information to and from the personal data device.

23. Apparatus as set forth in claim 16 wherein the personal data device is operable to carry software upgrades to the vehicle.

24. An electropneumatic vehicle brake system including:
a pneumatic valve for controlling a vehicle brake function;
an electrically operable control member for controlling the valve;
an electronic control unit for operating the control member and thereby to control the valve;
a personal data device reader associated with the ECU; and
a personal data device that can be carried by a driver of the vehicle;
the ECU and reader being operable, in response to communication between the reader and the personal data device, to perform credential verification on the personal data device and, upon verification, enable operation of the control member thereby to enable control of the valve.

25. A system as set forth in claim 24 wherein the valve is a park brake valve, the ECU is operable to lock out the control member of the park brake valve, and the credential verification enables unlocking of the control member by the ECU.

26. A system as set forth in claim 25 wherein the system includes a park control solenoid valve module and wherein the ECU is operable to disable the solenoid drivers corresponding to the park release function of the module.

27. A system as set forth in claim 25 including means for providing an audible or visual notification of attempted park release when verified with a first sound and an audible notification of attempted park release when not verified with a second sound.

28. A system as set forth in claim 24 wherein the brake system is part of an electronic network of the vehicle including other nodes and the ECU is operable to transmit the credential verification to other nodes of the vehicle network.

29. A system as set forth in claim 28 wherein the credential verification enables reading and storing of fault information, and writing or firmware upgrades to the ECU.

30. A system as set forth in claim 24 wherein the pneumatic valve is a park control valve for controlling a vehicle park brake function, and the ECU and reader are operable to enable or disable operation of the control member thereby to enable controlling the park control valve by preventing sufficient pressure from being sustained at the supply inlet or the control inlet or the delivery outlet of the park control valve.
